(19) Europäisches Patentamt

European Patent Office

Office européen des brevets

(11) Veröffentlichungsnummer: **0 330 702**

**A1**

(12) **EUROPÄISCHE PATENTANMELDUNG**

(21) Anmeldenummer: 88102957.3

(22) Anmeldetag: 27.02.88

(51) Int. Cl.⁴: **B03B 5/56** , **A23N 12/02**

(43) Veröffentlichungstag der Anmeldung:
06.09.89 Patentblatt 89/36

(84) Benannte Vertragsstaaten:
AT BE CH DE ES FR GB GR IT LI LU NL SE

(71) Anmelder: **Gerlach, Kay, Dipl.-Ing.**
**In den Wiesen 8**
**D-2730 Zeven(DE)**

(72) Erfinder: **Gerlach, Kay, Dipl.-Ing.**
**In den Wiesen 8**
**D-2730 Zeven(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Vorrichtung zum Trennen von Steinen etc. aus einem Erdfrüchte enthaltenden Schwemmstrom.**

(57) Vorrichtung der hier angesprochenen Art, nämlich Steinefänger, sind überlicherweise mit Schöpftaschen (24) versehen die eine Auftriebsströmung im Schwemmstrom herbeiführen sollen. Bisher sind derartige Schöpftaschen relativ lang ausgebildet worden, da man der Annahme war, daß zur Erzeugung einer ausreichenden Auftriebsströmung die Wassereintrittsöffnung (26) der Schöpftasche (24) aus dem Schwemmstrom austauchen müßte. Dadurch konnte nur eine begrenzte Anzahl von Schöpftaschen (24) am Umfang des Steinefängers untergebracht werden, wodurch der Trennleistung natürliche Grenzen gesetzt waren. Die Erfindung schafft einen Steinefänger mit erhöhter Abscheideleistung.

Beim erfindungsgemäßen Steinefänger sind die Schöpftaschen (24) relativ kurz ausgebildet mit voll im Schwemmstrom eingetauchten Wassereintrittsöffnungen (26) und Wasseraustrittsöffnungen (27). Dadurch läßt sich eine erheblich größere Anzahl von einfach ausgebildeten Schöpftaschen (24) dem Steinefänger zuordnen als es bei den bisherigen Steinefängern möglich war, und zwar ohne Einbußen in bezug auf die Aufwärtsströmung des Wassers.

Der Steinefänger eignet sich besonders zum Aussondern von Steinen aus einem Rüben oder Kartoffeln enthaltenden Schwemmstrom.

Fig. 2

## Vorrichtung zum Trennen von Steinen etc. aus einem Erdfrüchte enthaltenden Schwemmstrom

Die Erfindung betrifft eine Vorrichtung zum Trennen von Feststoffen unterschiedlichen spezifischen Gewichts in einem Schwemmstrom, insbesondere zum Trennen von Steinen und Erdfrüchten, mit einer drehbar in einem Gehäuse gelagerten Siebtrommel und wenigstens einem dieser zugeordneten Steinefangring mit mehreren zur Aufnahme von Wasser aus dem Schwemmstrom dienenden Schöpftaschen, die an ihren gegenüberliegenden Endbereichen über Wasserein-und -austrittsöffnungen verfügen.

Eine derartige Vorrichtung ist aus der US 4 187 172 bekannt. Diese weist an der Peripherie des Steinefangrings angeordnete Kanäle auf. Diese Kanäle verfügen über eine Mehrzahl von Kanalabschnitten, die jeweils eine Schöpftasche bilden. Die Kanalabschnitte jeder Schöpftasche sind so ausgebildet, daß der in Drehrichtung vordere Kanalabschnitt einer Schöpftasche axial neben dem in Drehrichtung hinteren Kanalabschnitt einer anderen Schöpftasche verläuft. Am in Drehrichtung vorderen Kanalabschnitt befindet sich eine Wassereintrittsöffnung und am in Drehrichtung hinteren Kanalabschnitt eine Wasseraustrittsöffnung. Diese dienen als Wasser-Schöpföffnungen.

Bei den so ausgebildeten Schöpftaschen fließt aufgrund der Rotation der Siebtrommel bzw. des Steinefangrings Wasser aus dem Gehäuse durch die Wassereintrittsöffnung, sobald diese unter den Schwemmstrom-Pegel gelangt. Bei Weiterdrehung fließt das Wasser durch die Wasseraustrittsöffnungen radial nach innen in den Steinefangring zur Erzeugung einer aufsteigenden Strömung im Schwemmstrom. Diese Auftriebsströmung sorgt dafür, daß nur die relativ schweren Steine, Sande etc. sich im Steinefangring sammeln, nicht aber die leichteren Erdfrüchte wie beispielsweise Rüben, Kartoffeln etc.

Bei dieser bekannten Vorrichtung ging man davon aus, daß eine Aufwärtsströmung nur dann entsteht, wenn die Wassereintrittsöffnung an der jeweiligen Schöpftasche bereits aus dem Schwemmstrom ausgetaucht ist, sich also nur noch die dazugehörende Wasseraustrittsöffnung unterhalb des Schwemmstrom-Pegels befindet. Demzufolge ist es bei dieser bekannten Vorrichtung notwendig, daß durch die Aneinanderreihung dreier Kanalabschnitte jede Schöpftasche (bei etwas unter der Drehachse der Vorrichtung liegendem Schwemmstrom-Pegel) sich etwa über den halben Umfang des Steinefangrings erstrecken muß. Dadurch können nur zwei Schöpftaschen jeder Vorrichtung zugeord net werden.

Da die Trennleistung einer derartigen Vorrichtung aber proportional zur Anzahl der gleichzeitig zum Austrag der abzusondernden Steine etc. dienenden Schöpftaschen ist, gehen die Bestrebungen dahin, mehrere Schöpftaschen dem Steinefangring zuzuordnen. Dazu ist es - wie bei der US 4 187 172 - erforderlich, die Kanalabschnitte so anzuordnen, daß sich diese bereichsweise überlagern. Dies ist mit einem erheblichen zusätzlichen Herstellungsaufwand verbunden, der zu einer wesentlichen Verteuerung einer solchen bekannten Vorrichtung beiträgt.

Hiervon ausgehend liegt der Erfindung die Aufgabe zugrunde, eine Vorrichtung der eingangs genannten Gattung mit einer großen Abscheideleistung bei gleichwohl einfacher Herstellung derselben zu schaffen.

Zur Lösung dieser Aufgabe ist die gattungsgemäße Vorrichtung gekennzeichnet durch derart ausgebildete Schöpftaschen, daß sowohl die Wassereintrittsöffnung als auch die Wasseraustrittsöffnung wenigstens jeweils einer Schöpftasche zeitweise sich gleichzeitig im Schwemmstrom befinden. Dadurch ist es möglich, die Schöpftaschen (in Umfangsrichtung der Vorrichtung gesehen) relativ kurz auszubilden, wodurch eine Vielzahl von Schöpftaschen unmittelbar hintereinanderliegend auf dem Umfang der Siebtrommel bzw. Steinefangrings untergebracht werden können. In verblüffend einfacher Weise erhöht sich so die Trenn- und Abscheideleistung der erfindungsgemäßen Vorrichtung. Auch sind die relativ kurzen Schöpftaschen sehr einfach ausgebildet, wodurch eine derartige Vorrichtung sich preiswert herstellen läßt.

Die erfindungsgemäße (kurze) Ausbildung der Schöpftaschen gewährleistet im Vergleich zu den bei bisher bekannten Steinefängern vorhandenen (langen) komplexen Schöpftaschen gleichwohl eine ausreichende Aufwärtsströmung des Schwemmstrom-Wassers im Inneren des Steinefangringes. Es hat sich nämlich gezeigt, daß es nicht -wie bei bekannten Vorrichtungen dieser Art - notwendig ist, daß zur Erzielung einer ausreichenden Aufwärtsströmung die Wassereintrittsöffnung der jeweiligen Schöpftasche aus dem Schwemmstrom ausgetaucht sein muß; vielmehr entsteht auch bei voll in den Schwemmstrom eingetauchter Wassereintritts- und -austrittsöffnung, wodurch die erfindungsgemäß kurzen Schöpftaschen erst möglich sind, eine ausreichende Aufwärtsströmung des Schwemmstrom-Wassers im Steinefangring.

Bei einer vorteilhaften Ausführungsform der Erfindung sind die Schöpftaschen zum unmittelbaren Eintritt des Wassers aus dem Schwemmstrom ausgebildet. Dadurch ist im Gegensatz zum Stand der Technik keine Aufeinanderfolge unterschiedlicher Kanalabschnitte zur Bildung einer Schöpftasche notwendig. Die erfindungsgemäßen Schöpftaschen können demgegenüber in einfachster Weise mit einen über den Teil des Umfangs des Steinefangrings verlaufenden Kanal konstanten Querschnitts ausgebildet sein. Solche Schöpftaschen sind nicht nur einfach herstellbar, sie ermöglichen auch eine äußerst kompakte Bauweise der erfindungsgemäßen Vorrichtung, indem es nicht notwendig ist, die Schöpftaschen auf Bereiche neben dem Steinefangring bzw. zwischen demselben und der Siebtrommel anzuordnen. Die axiale Länge der erfindungsgemäßen Vorrichtung ist zumindest in bezug auf bekannte Vorrichtungen mit ähnlicher Trenn- bzw. Abscheideleistung kleiner, da auch schon Vorrichtungen dieser Art mit zwei an gegenüberliegenden Enden der Siebtrommel angeordneten Steinefangringen und entsprechenden Schöpftaschen versehen worden sind, um akzeptable Durchsatzleistungen erreichen zu können. Solche werden von der er findungsgemäß ausgebildeten Vorrichtung mit nur einem Steinefangring und kompakter Bauweise erreicht.

Nicht zuletzt ist ein weiterer Vorteil dieser kompakten Bauweise der erfindungsgemäßen Vorrichtung darin zu sehen, daß die Maße derselben bezüglich einer bestimmten Abscheideleistung geringer werden. Damit ist auch eine Energieeinsparung verbunden.

Weiterhin wird vorgeschlagen, dem Querschnitt der Schöpftaschen ausgehend vom Wassereintritt zum Wasseraustritt hin zu verjüngen. Dieses führt zu einer Erhöhung der Strömungsgeschwindigkeit in jeder Schöpftasche, wodurch das Auftriebswasser mit relativ hoher Geschwindigkeit in das Innere des Steinefängers eintritt zur Erzielung einer besonders effektvollen Aufwärtsströmung im Steinefangring.

Schließlich weist nach einem weiteren wesentlichen Vorschlag der Erfindung jede Schöpftasche einen Schöpftrichter auf. Dieser befindet sich seitlich neben dem Steinefangring im Peripheriebereich der Siebtrommel. Durch die Schöpftrichter ist es möglich, die Wassereintrittsöffnungen der einzelnen Schöpftaschen zu vergrößern. Die Schöpftaschen lassen sich so leichter und rascher mit Wasser füllen. Darüber hinaus ist durch die Schöpftrichter entweder eine Vergrößerung der Schöpftaschen möglich, so daß der durch diese ins Innere des Steinefangrings eintretende Wasserstrom sich vergrößert zur Schaffung einer intensiveren Auftriebsströmung. Alternativ ist es möglich, aufgrund der Schöpftrichter das Volumen der Schöpftaschen im Umfangsbereich des Steinefangrings zu verringern, so daß sich diese nur über einen relativ geringen Winkelbereich an der Peripherie des Steinefangrings erstrecken. Es kann so eine noch größere Anzahl von Schöpftaschen einem Steinefangring zugeordnet werden.

Zwei Ausführungsbeispiele der erfindungsgemäßen Vorrichtung werden nachfolgend anhand der Zeichnung näher erläutert. In dieser zeigen:

Fig. 1 einen schematischen Vertikalschnitt durch eine erste Ausführungsform der Vorrichtung,

Fig. 2 einen Schnitt II-II durch den Steinefangring der Vorrichtung gemäß der Fig. 1,

Fig. 3 eine Abwicklung eines Teils des Steinefangrings, nämlich dreier Schöpftaschen,

Fig. 4 ein zweites Ausführungsbeispiel der Vorrichtung in einer Ansicht gemäß der Fig. 1,

Fig. 5 einen Schnitt V durch die Vorrichtung gemäß der Fig. 4 und

Fig. 6 eine Abwicklung des Umfangs des Steinefangrings der Fig. 4 und 5 im Bereich einer Mehrzahl von Schöpftaschen.

Die in der Zeichnung dargestellten Ausführungsbeispiele der Vorrichtung beziehen sich auf einen sogenannten Steinefänger, der in einem Schwemmstrom einer Zuckerrübenfabrik eingebaut ist. Der Schwemmstrom dient zur hydraulischen Förderung der in der Zuckerfabrik zu verarbeitenden Erdfrüchte, nämlich Rüben, samt mit den Rüben vom Feld angelieferter Steine, Kies, Kraut und sonstigen Faserbestandteilen. Aus dem üblicherweise in einem Kanal auf dem Betriebshof der Zuckerfabrik geführten Schwemmstrom werden durch den Steinefänger Steine und andere Schwerteile (Kies, Sand etc.) abgesondert. Dazu wird der Schwemmstrom mit den darin enthaltenen festen Bestandteilen in Längsrichtung durch den Steinefänger hindurchgeleitet.

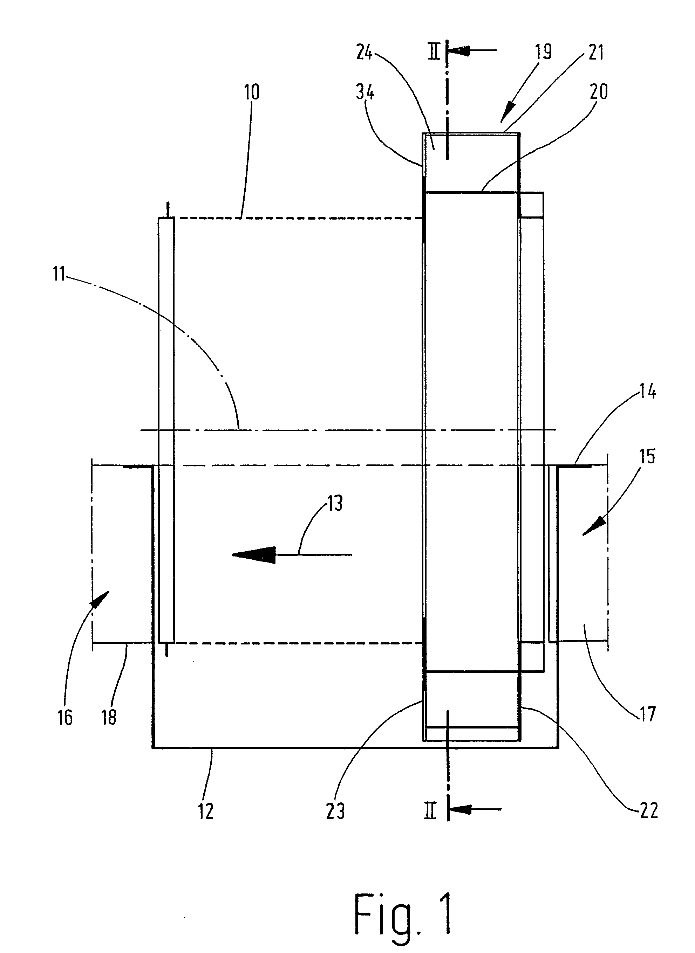

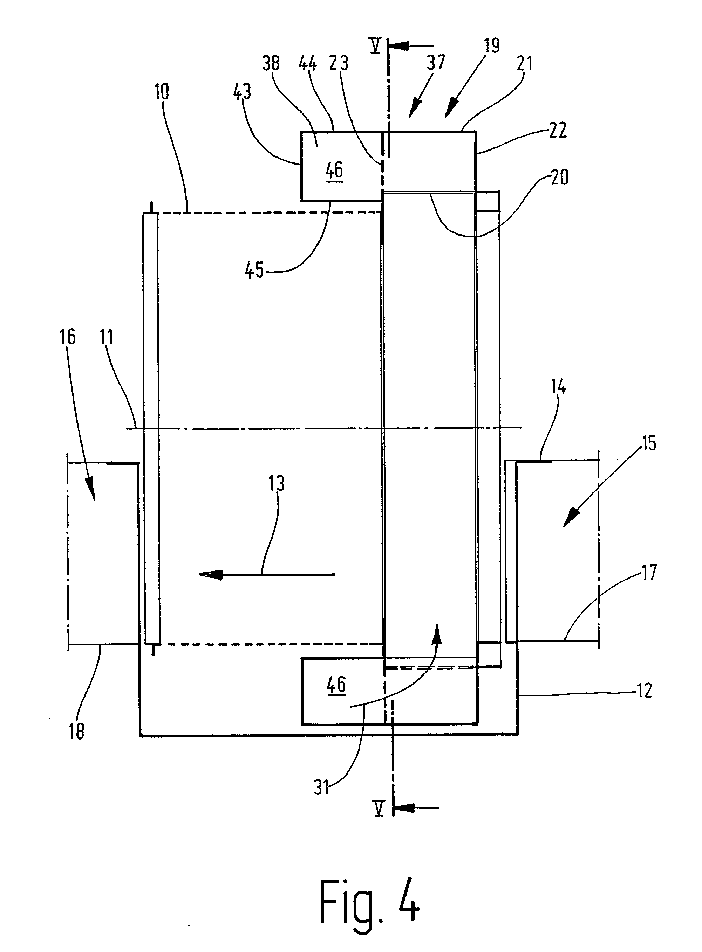

Der gezeigte Steinefänger verfügt über eine Siebtrommel 10, die um ihre Längsmittelachse 11 drehbar in einem feststehenden äußeren Gehäuse 12 gelagert ist. Die als Drehachse dienende Längsmittelachse 11 der Siebtrommel 10 erstreckt sich längs zur durch einen Pfeil 13 in den Fig. 1 und 4 angedeuteten Strömungsrichtung des Schwemmstroms. Das Gehäuse 12 ist in den gezeigten Ausführungsbeispielen des Steinefängers als oben offene (Halb-) Schale ausgebildet, derart, daß die Längsmittelachse 11 der Siebtrommel 10 geringfügig aus dem Gehäuse 12 herausragt. Ein oberer Rand 14 des Gehäuses 12 dient dabei zur nicht näher dargestellten Lagerung einer entlang der Längsmittelachse 11 sich erstreckenden mittigen Drehachse der Siebtrommel 10. An einer Eintrittsseite 15 und an einer Austrittsseite 16 weist das Gehäuse 12 jeweils einen Schwemmstromanschluß 17 bzw. 18 auf. Dieser ist -wie der nicht näher gezeigte Kanal für den Schwemmstrom - im vorliegenden Ausführungsbeispiel mit einem etwa rechteckigen Querschnitt versehen. Im Bereich zwischen den Schwemmstromanschlüssen 17 und 18 strömt demnach der Schwemmstrom längs durch den Steinefänger hindurch.

Aus den Fig. 1 und 4 ist erkennbar, daß die Siebtrommel 10 an ihrem zur Eintrittsseite 15 des Schwemmstroms gerichteten Ende mit einem Steinefangring 19 versehen ist. Dieser ist fest mit der Siebtrommel 10 verbunden, läuft also mit dieser um. Gebildet wird der Steinefangring 19 durch einen zylindrischen Innenring 20, dessen Durchmesser etwas größer als der der perforierten Siebtrommel 10 ist, einen Außenring 21 mit im Vergleich zum Innenring 20 wiederum größeren Durchmesser und zwei mit Abstand zueinander angeordneten, parallelen Stirnwandungen 22 und 23. Die Stirnwandungen 22 und 23 sind etwa kreisringförmig ausgebildet und mit den gegenüberliegenden Rändern des Innenrings 20 und des Außenrings 21 verbunden, vorzugsweise verschweißt. Die zur Siebtrommel 10 gerichtete Stirnwandung 23 dient gleichzeitig zur Verbindung des Steinefangrings 19 mit der Siebtrommel 10.

Bei dem in den Fig. 1 bis 3 gezeigten Ausführungsbeispiel des Steinefängers sind am Umfang des Steinefangrings 19 sechs Schöpftaschen 24 angeordnet. Diese sind mit gleichen Winkelabständen auf dem Umfang des Steinefangrings 19 verteilt. Im gezeigten Ausführungsbeispiel werden die Schöpftaschen 24 gebildet durch den vom Innenring 20, dem Außenring 21 und den beiden parallelen Stirnwandungen 22 bzw. 23 eingeschlossenen Raum. Dadurch erstrecken sich alle Schöpftaschen 24 nur im Bereich zwischen den parallelen Stirnwandungen 22 bzw. 23, ragen also seitlich nicht über den Steinefangring 19 hinaus und verfügen über ihre gesamte Länge über einen etwa gleichen, rechteckförmigen Querschnitt.

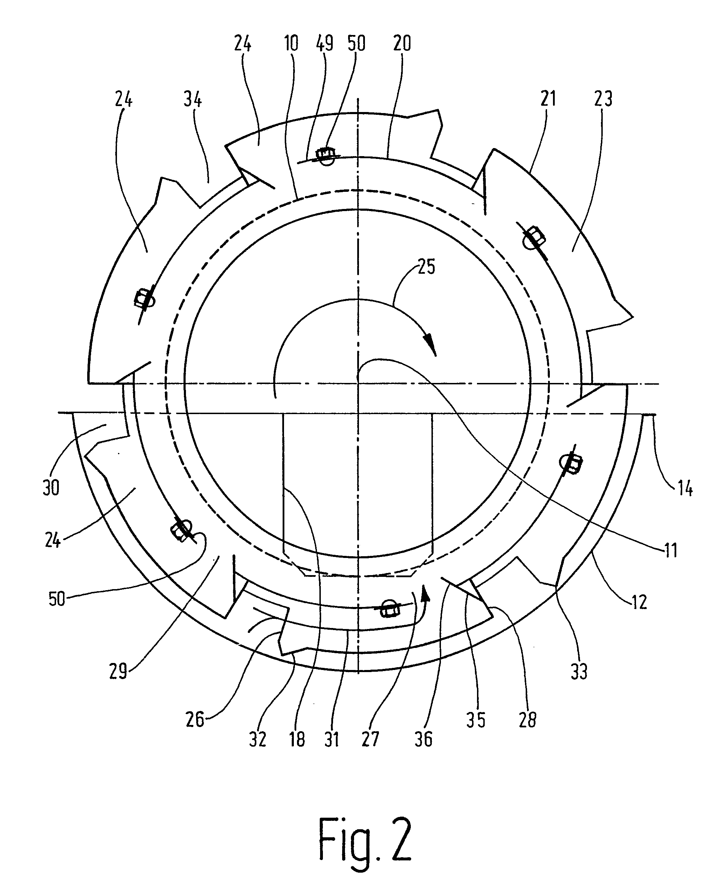

Aus der Fig. 2 wird ersichtlich, daß die in der durch den Pfeil 25 gekennzeichneten Umlaufrichtung des Steinefängers vornliegenden Stirnseiten der Schöpftaschen 24 offen sind zur Bildung jeweils einer Wassereintrittsöffnung 26 für die Schöpftaschen 24, in die das Wasser unmittelbar einströmt. Des weiteren weist jede Schöpftasche 24 eine Wasseraustrittsöffnung 27 auf, die - wiederum in Umlaufrichtung 25 des Steinefängers gesehen - kurz vor einer geschlossenen Rückwand 28 jeder Schöpftasche 24 sich befindet. Gebildet sind die Wasseraustrittsöffnungen 27 durch jeweils einen über die gesamte Breite des Steinefangrings 19 verlaufenden (rechteckigen) Durchbruch 29 im Innenring 20.

Jede der so ausgebildeten Schöpftaschen 24 nimmt bei entsprechender Relativstellung während der Drehung des Steinefängers Wasser aus dem Schwemmstrom bzw. aus dem Gehäuse 12 auf und leitet dieses durch den Innenring 20 ins Innere des Steinefangrings 19, und zwar bei voll in den Schwemmstrom eingetauchter Wassereintrittsöffnung 26 und Wasseraustrittsöffnung 27. Die dadurch trotz der voll in den Schwemmstrom eingetauchten Schöpftasche 24 oder Schöpftaschen 24 entstehende radial nach innen gerichtete Wasserströmung erzeugt einen Auftrieb im Steinefangring 19, gegen den Steine und andere Gegenstände mit relativ schwerem spezifischem Gewicht sich im Steinefangring 19, nämlich zwischen Innenring 20 und Außenring 21 absetzen, während Rüben etc. durch den Auftrieb zurückgehalten und durch den Schwemmstrom in die Siebtrommel 10 weitergefördert werden. Die Wasserversorgung der Schöpftaschen 24 erfolgt durch einen Rückfluß des aus der perforierten Siebtrommel radial nach außen strömenden Wassers, das sich zwischen dem Mantel der Siebtrommel 10 und dem Gehäuse 12 sammelt. Dieses Wasser kann gegebenenfalls angereichert sein durch kleine Feststoffpartikel, die durch die Perforation der Siebtrommel 10 hindurchgelangen können, beispielsweise Sand.

Weiterhin kann der Fig. 2 entnommen werden, daß die einzelnen Schöpftaschen 24 mit Abstand am Außenumfang des Steinefangrings 19 angeordnet sind, derart, daß jeweils zwischen der Rückwand 28 einer Schöpftasche 24 und der Wassereintrittsöffnung 26 der darauffolgenden Schöpftasche 24 ein Freiraum 30 entsteht. Durch diesen kann zur Versorgung der Schöpftaschen 24 das Wasser ungehindert in die Wassereintrittsöffnung 26 hineinströmen, wie es in der Fig. 2 durch einen Strömungspfeil 31 angedeutet ist.

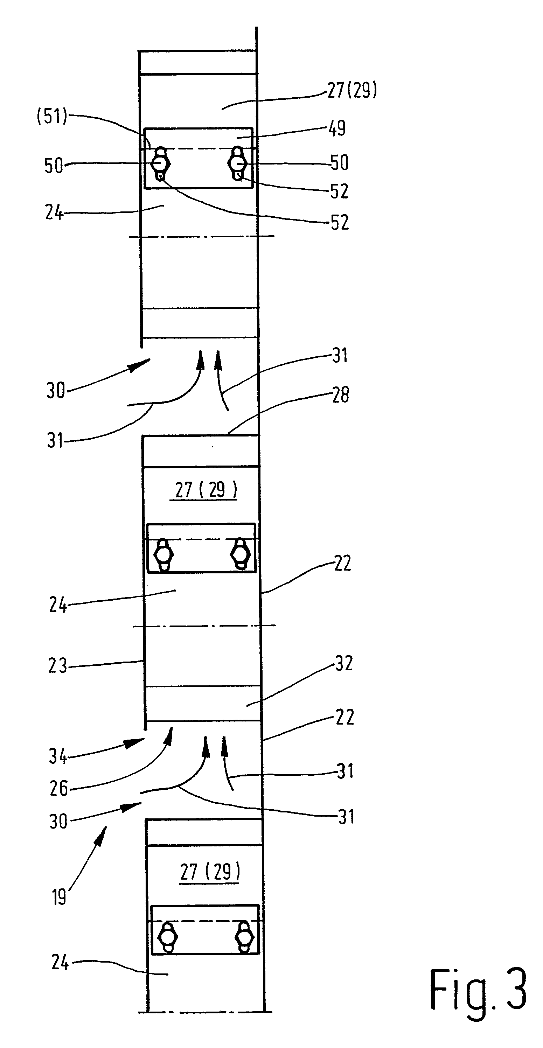

Im gezeigten Ausführungsbeispiel ist im Bereich des Freiraums 30 der Steinefangring 19 seitlich offen. Dazu verfügt gemäß der Darstellung in der Fig. 3 die zur Siebtrommel 10 gerichtete Stirnwandung (23) über entsprechende Unterbrechungen 34 im Bereich des Durchbruchs 29. Alternativ kann auch die (zweite) Stirnwandung 22 mit entsprechenden Durchbrüchen versehen sein.

Wie ferner der Fig. 2 entnommen werden kann, ist im vorliegendem Ausführungsbeispiel ein zu jeder Wassereintrittsöffnung 26 gerichteter Endbereich der Schöpftaschen 24 mit einer durch eine Abwinklung 32 des Außenrings 21 gebildeten Bechererweiterung versehen. Diese vergrößert den Querschnitt der Schöpftaschen 24 zur Wassereintrittsöffnung 27 hin, indem eine freie Kante 33 jeder Abwinklung 32 mit geringfügigem Abstand am Innenmantel des Gehäuses 12 endet. Bei umlaufendem Steinefänger dienen dadurch die freien Kanten 33 der Abwinklungen 32 gleichzeitig als Abstreifer zur Aufnahme von sich unten im Gehäuse 12 sammelnden schweren Feingutes, beispielsweise Sand. Dieser wird somit durch den Steinefangring 19 kontinuierlich abgefördert zur Verhinderung der Bildung eines (Sand-)Haufwerks im Gehäuse 12.

Bei dem hier gezeigten Steinefänger ist den Wasseraustrittsöffnungen 27 der Schöpftaschen 24 jeweils ein Leitblech 35 zugeordnet. Dieses ist gegenüber der Radialrichtung des Steinefängers geneigt, und zwar zur Längsmittelachse 11 hin nach vorn, also in Umlaufrichtung 25. Befestigt ist jedes Leitblech 35 mit einem unteren freien Ende an der Rückwand 28 der jeweiligen Schöpftasche 24 sowie dem zu dieser gerichteten Rand im Durchbruch 29 des Innenrings 20. Die Länge des Leitblechs 35 ist derart bemessen, daß dieses mit einem oberen Endbereich 36 ins Innere des Steinefangrings 19 ragt, also gegenüber dem Innenring 20 vorsteht.

Schließlich weist dieser Steinefänger größenveränderliche Wasseraustrittsöffnungen 26 auf. Dazu ist innerhalb jeder Schöpftasche 24 eine Blende 49 angeordnet. Diese ist an der zum Außenring 21 gerichteten Seite des Innenrings 20 mit entsprechenden Schrauben 50 befestigt, und zwar im Bereich der von der Rückwand 28 weggerichteten Querkante 51 der jeweiligen Wasseraustrittsöffnung 27. Die Verstellbarkeit der Blende 49 wird hier erreicht durch zwei sich längs zur Umlaufrichtung 25 des Steine fängers verlaufende Langlöcher 52 in der Blende 49. Alternativ oder zusätzlich können derartige Langlöcher auch im Innenring 20 vorgesehen sein. Im letztgenannten Falle ermöglichen die zusätzlichen Langlöcher einen größeren Verstellbereich der jeweiligen Blende 49.

Das in den Fig. 4 bis 6 gezeigte zweite Ausführungsbeispiel des Steinefängers weist gegenüber dem vorstehend beschriebenen Steinefänger in besonderer Weise ausgebildete Schöpftaschen 37 auf. Wie aus der Darstellung in der Fig. 4 deutlich ersichtbar ist, verlaufen die Schöpftaschen 37 zum Teil - wie im vorgehend beschriebenen Ausführungsbeispiel - im Peripheriebereich des Steinefangrings, während sie zu einem anderen Teil seitlich gegenüber dem Steinefangring 19 hervorkragen, und zwar zur Seite der Siebtrommel 10 hin. Die in diesem Ausführungsbeispiel gezeigten Schöpftaschen 37 erstrecken sich somit über beide Seitenbereiche der zur Siebtrommel 10 gerichteten Stirnwandung 23.

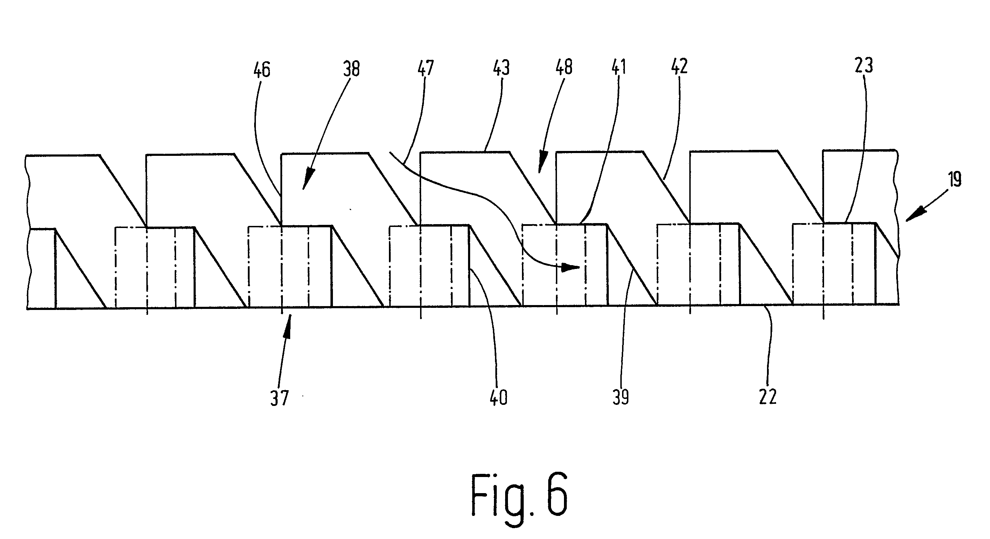

Wie der Fig. 6 entnommen werden kann, weisen die Schöpftaschen 37 einen etwa S- bzw. Z-förmigen Verlauf auf. Dieser wird gebildet durch einen jeder Schöpftasche 37 zugeordneten Schöpftrichter 38. Letzterer bildet den außerhalb des peripheralen Bereichs des Steinefangrings 19 liegenden, seitlich auskragenden Bereich jeder Schöpftasche 37. Gebildet wird der Schöpftrichter 38 durch mehrere Wandabschnitte. Ein Wandabschnitt 39 verläuft diagonal von einer zur Stirnwandung 22 gerichteten Kante einer Schöpftasche 23 zur an der danebenliegenden Stirnwandung 23 liegenden Kante einer Rückwand 40 der darauffolgenden Schöpftasche 37. Hieran schließt als weiterer Wandabschnitt 41 ein entsprechender Abschnitt der Stirnwandung 23 an. Die gegenüberliegende Seite des Schöpftrichters 38 wird durch einen Wandabschnitt 42 gebildet, der ausgehend von einer in der Ebene der siebtrommelseitigen Stirnwandung 23 sich befindenden Kante der Schöpftasche 37 parallel zum Wandabschnitt 39 verläuft. Hieran schließt sich ein Wandabschnitt 43 an, der parallel mit Abstand zur Stirnwandung 23 verläuft. Dieser Abstand des Wandabschnitts 43 zur Stirnwandung 23 gleicht im vorliegenden Ausführungsbeispiel etwa dem Abstand der Stirnwandung 22 und 23 untereinander. Durch entsprechende Bodenwandungsabschnitte 44 und 45, die seitliche Erweiterungen des Innenrings 20 und des Außenrings 21 bilden, sind die Schöpftrichter 38 kastenförmig geschlossen.

Wie weiter der Fig. 6 entnommen werden kann, verfügen die Schöpftrichter 38 über jeweils eine radial gerichtete Wassereintrittsöffnung 46, die über einen etwa rechteckigen Querschnitt verfügt und neben dem Steinefangring 19 liegt. Von hier aus gelangt das Wasser in die jeweiligen Schöpftaschen 37, wie es der Strömungspfeil 47 andeutet. Demnach gelangt das Wasser in die Schöpftasche 37 durch einen etwa dreieckförmigen Wasserzufuhrschacht 48 zweier aufeinanderfolgender Schöpftrichter 38, also am schräggerichteten Wandabschnitt 42 des der jeweiligen Wassereintrittsöffnung vorausgehenden Schöpftrichters 38 entlang, wie dies der Strömungspfeil 47 in der Fig. 6 verdeutlicht.

Die Wasseraustrittsöffnungen 46 können auch bei diesem Ausführungsbeispiel gemäß der in den Fig. 2 und 3 des ersten Ausführungsbeispiels gezeigten Weise durch Blenden 49 oder anderen alternativen Mitteln größenveränderlich sein.

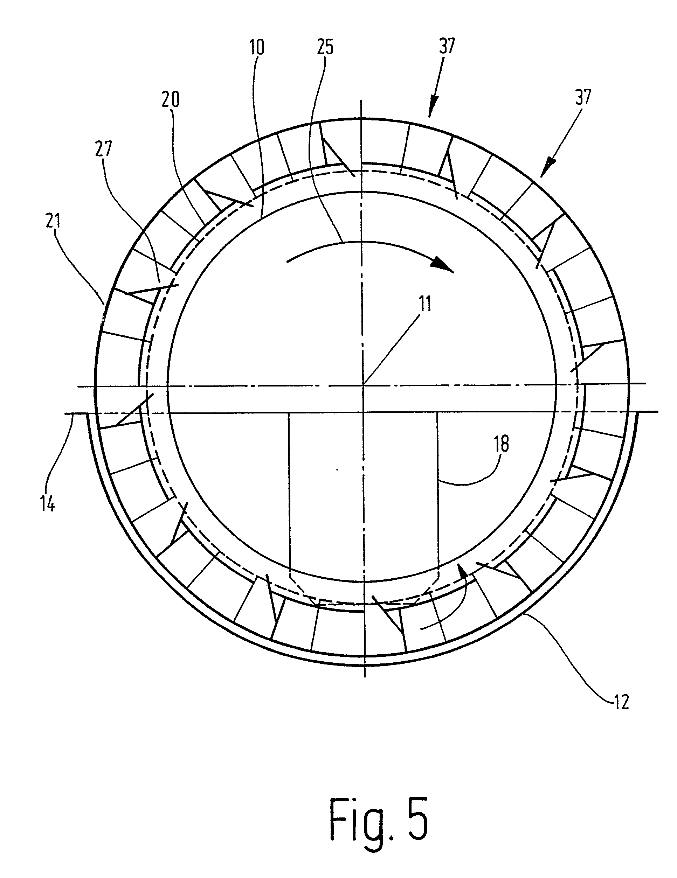

Wie aus der Fig. 5 deutlich erkennbar, bieten die in vorstehender Weise ausgebildeten Schöpftaschen 37 die Möglichkeit, eine noch größere Anzahl von Schöpftaschen 37 einem Steinefangring 19 zuzuordnen. So ist im vorliegendem Ausführungsbeispiel im Vergleich zum vorstehend beschriebenen ersten Ausführungsbeispiel die doppelte Anzahl von Schöpftaschen 37 dem Steinefangring 19 zugeordnet, nämlich zwölf Stück. Mehrere dieser Schöpftaschen 37 befinden sich hierbei vollständig eingetaucht, also mit ihren Wassereintrittsöffnungen 46 und ihren Wasseraustrittsöffnungen 27, im Schwemmstrom. Beim vorliegenden Ausführungsbeispiel könnte bei etwa vollständig gefülltem Gehäuse 12 etwa fünf Schöpftaschen 37 gleichzeitig vollständig im Schwemmstrom eingetaucht sein.

## Ansprüche

1. Vorrichtung zum Trennen von Feststoffen unterschiedlichen spezifischen Gewichts in einem Schwemmstrom, insbesondere zum Trennen von Steinen und Erdfrüchten, mit einer drehbar in einem Gehäuse (12) gelagerten Siebtrommel (10) und wenigstens einem dieser zugeordneten Steinefangring (19) mit mehreren zur Aufnahme von Wasser aus dem Schwemmstrom dienenden Schöpftaschen (24, 37), die an ihren gegenüberliegenden Endbereichen über Wassereintrittsöffnungen (26, 46) und Wasseraustrittsöffnungen (27) verfügen, **gekennzeichnet,** durch derart ausgebildete Schöpftaschen (24, 37), daß sowohl die Wassereintrittsöffnungen (26, 46) als auch die Wasseraustrittsöffnungen (27) wenigstens jeweils einer Schöpftasche (24, 37) zeitweise sich gleichzeitig im Schwemmstrom befinden.

2. Vorrichtung nach Anspruch 1, dadurch gekennzeichnet, daß die Wassereintrittsöffnungen (26, 46) der Schöpftaschen (24, 38) zum unmittelbaren Eintritt von Wasser aus dem Schwemmstrom ausgebildet sind.

3. Vorrichtung nach Anspruch 1 oder 2, dadurch gekennzeichnet, daß die Schöpftaschen (24) am Außenumfang des Steinefangrings (19) angeordnet sind.

4. Vorrichtung nach Anspruch 3, dadurch gekennzeichnet, daß jede Schöpftasche (24) eine vollständig über die in Drehrichtung der Siebtrommel (10) vornliegende Stirnseite verlaufende Wassereintrittsöffnung (26) aufweist.

5. Vorrichtung nach Anspruch 3 oder 4, dadurch gekennzeichnet, daß sich der Querschnitt der Schöpftaschen (24) ausgehend von der Wassereintrittsöffnung (26) zur Wasseraustrittsöffnung (27) hin verjüngt.

6. Vorrichtung nach Anspruch 4 oder 5, dadurch gekennzeichnet, daß die die Wassereintrittsöffnung (26) bildende Stirnseite wenigstens einer Schöpftasche (24) eine längs der Innenseite des Gehäuses (12) verlaufende Bechererweiterung aufweist, die vorzugsweise durch eine radial nach außen gerichtete Abwinklung (32) der radial außenliegenden Vorderkante der Schöpftasche (24) gebildet ist, derart, daß eine freie Kante (33) der Abwinklung (32) bei rotierender Siebtrommel (10) mit geringem Abstand an der Innenseite der Wandung des Gehäuses (12) entlangläuft.

7. Vorrichtung nach Anspruch 1 sowie einem oder mehreren der weiteren Ansprüche, dadurch gekennzeichnet, daß den Wasseraustrittsöffnungen (27) insbesondere in das Innere des Steinefangrings (19) ragende Leitbleche (35) zugeordnet sind.

8. Vorrichtung nach Anspruch 1 sowie einem oder mehreren der weiteren Ansprüche, dadurch gekennzeichnet, daß jeder Schöpftasche (37) ein Schöpftrichter (38) zugeordnet ist.

9. Vorrichtung nach Anspruch 8, dadurch gekennzeichnet, daß die Schöpftrichter (38) seitlich gegenüber dem Steinefangring (19) auskragen in den Peripheriebereich der Siebtrommel (10) hinein, und zwar vorzugsweise mit Abstand von der (gelochten) Mantelfläche der Siebtrommel (10).

10. Vorrichtung nach Anspruch 8 oder 9, dadurch gekennzeichnet, daß die Wassereintrittsöffnungen (46) aller Schöpftrichter (38) (in Umfangsrichtung der Siebtrommel 10 gesehen) mit Abstand (deckungsgleich) hintereinanderliegen, derart, daß alle Wassereintrittsöffnungen (46) der Schöpftrichter (38) auf einem unmittelbar neben dem Steinefangring (19) liegenden (Kreis-) Ring sich befinden.

11. Vorrichtung nach Anspruch 1 sowie einem oder mehreren der weiteren Ansprüche, dadurch gekennzeichnet, daß die Größe der Wassereintrittsöffnungen (26, 46) veränderlich ist, insbesondere durch eine verschiebbare Blende (49).

Fig. 1

Fig. 2

Fig.3

Fig. 4

Fig. 5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C-3 445 500 (SALZGITTER MASCHINEN) * Spalte 6, Zeile 66 - Spalte 8, Zeile 20; Figuren 1-3 * --- | 1,3,4,6 | B 03 B 5/56 A 23 N 12/02 |
| A | EP-A-0 212 541 (MAGUIN S.A.) * Spalte 2, Zeile 48 - Spalte 4, Zeile 32; Figuren 1-5 * --- | 1,8,9 | |
| A | EP-A-0 129 638 (G. GERLACH) --- | | |
| A | GB-A-2 095 585 (SN-ENGINEERING) --- | | |
| A,D | US-A-4 187 172 (M. DATSENKO et al.) ----- | | |

RECHERCHIERTE
SACHGEBIETE (Int. Cl.4)

B 03 B
A 23 N

Der vorliegende Recherchenbericht wurde für alle Patentansprüche erstellt

| Recherchenort | Abschlußdatum der Recherche | Prüfer |
|---|---|---|
| DEN HAAG | 17-10-1988 | LAVAL J.C.A |

EPO FORM 1503 03.82 (P0403)